# EUROPÄISCHE PATENTSCHRIFT

(11) **EP 0 485 662 B1**
(45) Veröffentlichungstag und Bekanntmachung des Hinweises auf die Patenterteilung: **19.04.1995**
(21) Anmeldenummer: 90123197.7
(22) Anmeldetag: 04.12.1990
(51) Int. Cl.: B23B 29/04

(54) **Verfahren und Vorrichtung zum voreingestellten Umrüsten bei spanabhebenden Bearbeitungsmaschinen**
Method and device to change with presetting for chipcutting machines
Méthode et dispositif de change avec de préréglage pour machines travaillant par enlèvement de copeaux

(30) Priorität: 16.11.1990 DE 4036558
(43) Veröffentlichungstag der Anmeldung: 20.05.1992
(73) Patentinhaber: GÖLTENBODT PRÄZISIONSWERKZEUG- UND MASCHINENFABRIK GmbH & CO., D-71229 Leonberg (DE)
(72) Erfinder:
(74) Vertreter: Otte, Peter, Dipl.-Ing.

(56) Entgegenhaltungen:
- EP-A- 0 051 263
- DE-A- 2 150 518
- DE-U- 8 232 018

## Beschreibung

Die Erfindung geht aus von einem Verfahren nach dem Oberbegriff des Anspruchs 1 und betrifft bevorzugt Mehrspindeldrehmaschinen, bei denen die jeweiligen Bearbeitungswerkzeuge, also Drehmeisel o.dgl. in einen Wechselhalter eingespannt sind, der seinerseits in hochgenauer Position auf einem Grundhalter fixiert wird.

Bei einem bekannten Schnellwechsel-Werkzeughalter für Drehmaschinen dieser Art (Siehe EP-A-51263), der natürlich auch ein Umrüsten bei solchen spanabhebenden Bearbeitungsmaschinen ermöglicht, sind Grundhalter und Wechselhalter für das Werkzeug relativ zueinander auf Führungen gegen einen verstellbaren Anschlag positionier- und senkrecht zur Führungsebene verspannbar. Zur Verspannung ist eine Klemmeinrichtung mit einem Exzenterbolzen vorgesehen, der in Hauptvorschubrichtung sowohl drehbar als auch axial verschiebbar gelagert und aus einer Wirkungsstellung in eine wirkungslose Stellung verschoben werden kann, in welcher er das im Grundhalter in einer T-Nut verschiebliche Spannstück freigibt, so daß ein Wechselhalter senkrecht zur Führungsebene abnehmbar ist. Durch eine solche Ausbildung können Wechseleinsätze eng nebeneinander positioniert und einzeln senkrecht zur Führungsebene entfernt werden, die gemeinsam auf den Grundhalter angeordnet sind. Um eine einwandfreie Klemmung zu gewährleisten, ist der Exzenterbolzen jederzeit zugänglich.

Bei solchen Bearbeitungsmaschinen ergeben sich im Einstellbereich des Schneidwerkzeugs dann, wenn von einem Werkzeug auf ein anderes umgerüstet werden muß oder wenn unterschiedliche Werkstücke zur Bearbeitung gelangen, erhebliche Probleme. Diese Probleme sind darauf zurückzuführen, daß es zwar möglich ist, an einem hochgenauen Voreinstellplatz - getrennt zur Bearbeitungsmaschine - die Relativpositionen Drehmeisel-Wechselhalter üblicherweise unter Verwendung optischer Einstellgeräte, präzise zu bestimmen, daß aber andererseits diese gesamten Einstellarbeiten dann verlorengehen, wenn man bei den bekannten Halteeinrichtungen (Grundhalter - Wechselhalter) auch den Grundhalter von seinem Befestigungsort an der Bearbeitungsmaschine, beispielsweise also Querschlitten bei einer Mehrspindeldrehmaschine, herunternehmen muß, um etwa für ein anderes Bearbeitungsaggregat, beispielsweise Fräseinrichtung u.dgl. Platz zu machen. In diesem Fall geht die gesamte, vorher aufgewendete Rüstzeit verloren, was auch dann zutrifft, wenn von einem Werkstück auf ein anderes mit unterschiedlichen Abmessungen und Bearbeitungsdaten umgerüstet werden muß. Da diese Einstellzeit an der Maschine geleistet werden muß und durchaus zwischen 12 und 30 Stunden betragen kann, ergeben sich hierdurch nicht nur unakzeptable, jeweils zusätzliche Rüstzeiten, sondern auch Stillstandszeiten für die jeweilige Bearbeitungsmaschine, während welcher mit dieser nicht gearbeitet werden kann. Dies führt bei beiden Gesichtspunkten zu hohen Zusatzkosten, so daß der Erfindung die Aufgabe zugrundeliegt, die bisher beispielsweise bei einem Wechsel des Bearbeitungsaggregats oder bei zwischenzeitlichem Bearbeiten unterschiedlicher Werkstücke notwendigerweise erneut aufzuwendende verlorene Zeit, um im Wiederholungsfall ein früher schon eingestelltes Werkzeug wieder maßhaltig produzieren zu können, zu vermeiden und hierdurch gleichzeitig entscheidend kostengünstiger zu arbeiten.

Der Grund, warum bisher beispielsweise bei einem Werkstückwechsel (kürzeres oder längeres Werkstück) jedesmal erneut die gesamte Einstellarbeit an der Maschine geleistet werden muß, liegt natürlich darin, daß man die Basis- oder Ausgangs-Einstellpunkte, die man für ein gegebenes Werkstück gefunden hat, wieder vollständig verliert und man sozusagen wieder von vorn anfangen muß, wenn ein anderes Werkstück bearbeitet werden muß, wobei die bisherigen Einstellverfahren darauf beruhten, daß zwischen dem Grundhalter und dem Wechselhalter, der die verschiedenen spanabhebenden Bearbeitungswerkzeuge einspannt, eine feste, unveränderte Relativposition vorgegeben ist, die sich aus gegenseitigen festen Anschlägen zwischen Grundhalter und Wechselhalter ableitet.

### Vorteile der Erfindung

Die Erfindung löst diese Aufgabe mit den Merkmalen des Anspruchs 1 und hat gegenüber den bisher bei solchen Systemen üblichen Vorgehensweise den Vorteil, daß schon einmal aufgewendete Einstellzeiten erhalten werden können, und zwar auch und gerade dann, wenn von einem Werkstück auf ein anderes umgerüstet werden muß, welches kürzer oder länger als das ursprüngliche Werkstück ist, oder wenn die Position des Bearbeitungswerkzeugs von dem Querschlitten einer Mehrspindeldrehmaschine beispielsweise vollständig abgeräumt werden muß, weil ein anderes Bearbeitungsaggregat, etwa ein Fräsaggregat, aufgebaut werden muß.

Durch Notieren und Aufbewahren der ursprünglichen Einstelldaten ermöglicht es die Erfindung, bei einem doch häufiger auftretenden Wiederholungsfall, bei dem beispielsweise ein gleiches Werkstück mit gleichen Abmessungen zu einem späteren Zeitpunkt wieder bearbeitet werden muß, die ursprünglich gewonnenen Einstelldaten dadurch wieder zugrundezulegen, daß lediglich der Grundhalter mittels einer geeigneten Einstellvorrichtung, beispielsweise einem Meßuhrenhalter, auf den Querschlitten wieder in einer vorgegebenen Abstandsbeziehung beispielsweise zur Spindelstirnseite oder Spindelnase ausgerichtet wird - als einzige an der Bearbeitungsmaschine durchzuführende Einstellarbeiten -, während die Beziehung des Wechselhalters mit dem von diesem eingespannten Werkzeug zum Grundhalter auf einem (optischen) Voreinstellplatz separat zur Bearbeitungsmaschine durchgeführt werden kann. Die beiden Teile Grundhalter und Wechselhalter nehmen dann zueinander in der Bearbeitungsposition eine vorgegebene, durch Anschläge bestimmte Relativposition zueinander ein, die auf einen festen Anschlag am Grundhalter und einem variierbaren Anschlag am Wechselhalter basiert. Dieser in seiner Position veränderbare Anschlag des Wechselhalters erfährt dann seine Präzisionspositionierung im Bereich der optischen Voreinstellung.

Dies bedeutet mit anderen Worten, daß Grundhalter und Wechselhalter zueinander je nach Bearbeitungswerkzeug bzw. zu bearbeitendem Werkstück in verschiedene Relativpositionen gebracht werden bzw. stehen können, die durch gegenseitige Anschläge bestimmt sind. Dieser Freiheitsgrad ergibt sich in einer Richtung parallel zur jeweiligen Spindelachse und wird gewährleistet durch Hochpräzisionsführungen, die in dieser Richtung verlaufen und die beim Grundhalter beispielsweise in einer Halbrundform präzisionsbearbeitete, schienenartige Führungsvorsprünge sein können, die in entsprechende präzisionsbearbeitete, ebenfalls halbrundförmige Gleitnuten am jeweiligen Wechselhalter eingreifen. Hierdurch läßt sich der Wechselhalter parallel zur Spindelachse und entsprechend der jeweiligen Drehlänge verändernd verschieben, während durch die Präzisionsbearbeitung der ineinandergreifenden Gleitvorsprünge und -nuten der Abstand des Werkzeugs zum Werkstück gewahrt bleibt; dieser Abstand wird durch entsprechende optische Präzisionsvoreinstellung ohnehin nicht an der Bearbeitungsmaschine bestimmt.

Die Erfindung gewährleistet also, daß der Wechselhalter schon voreingestellt in der genauen Bearbeitungsposition auf die Maschine zurückkommt, entweder weil der Grundhalter seinen Platz behalten hat, oder weil er reproduzierbar wieder positioniert werden kann. Zu diesem Zweck können Einrichtehalter mit einer Meßuhr verwendet werden, die ähnlich einem Wechselhalter ausgebildet auf den Grundhalter aufgesetzt und mit diesem verspannt werden in einer gegenseitigen Abstandsgeometrie, woraufhin dann die Einheit aus Einrichtehalter und Grundhalter so lange gegen die Spindel vorgefahren wird, bis die Meßuhr am Einrichtehalter einen bestimmten Wert zeigt, der beispielsweise vorher an der Einstellvorrichtung geholt worden ist.

Durch die in den Unteransprüchen aufgeführten Maßnahmen sind vorteilhafte Weiterbildungen und Verbesserungen der Erfindung möglich. Besonders vorteilhaft ist die Anordnung weiterer Fixierschrauben für die Anschlagpositionierung im Bereich der optischen Voreinstellung am Werkzeug- oder Wechselhalter, wodurch neben der Drehlänge auf den Durchmesser des Werkstücks eingestellt werden kann, mit weiteren Möglichkeiten zur Einstellung der Zylindrizität und der Schneidhöhe.

### Zeichnung

Ausführungsbeispiele der Erfindung sind in der Zeichnung dargestellt und werden in der nachfolgenden Beschreibung näher erläutert. Es zeigen:
- Fig. 1: den beispielsweise auf einem jeweiligen Querschlitten einer Mehrspindeldrehmaschine zu befestigenden Grundhalter in einer Seitenansicht und
- Fig. 2: den gleichen Grundhalter in Draufsicht, während die
- Fig. 3: den Grundhalter der Fig. 1 und 2 in einer weiteren Seitenansicht in Richtung des Pfeils III der Fig. 2 zeigt;
- Fig. 4: zeigt eine erste Ausführungsform eines auf dem Grundhalter der Fig. 1 bis 3 zu befestigenden Wechselhalters zur Einspannung von Bearbeitungswerkzeugen in Seitenansicht und
- Fig. 5: den gleichen Wechselhalter in Draufsicht, während die
- Fig. 6 und 7: eine mögliche Ausführungsform einer Einstellvorrichtung in Form eines Meßuhrenhalters, zu befestigen auf dem Grundhalter, in Draufsicht und Seitenansicht zeigt, aufgesetzt auf eine Variante einer Grundhalterform; schließlich zeigen die
- Fig. 8 und 9: eine zweite Ausführungsform eines Wechselhalters in Draufsicht und Seitenansicht.

### Beschreibung der Ausführungsbeispiele

Der Grundgedanke vorliegender Erfindung besteht darin, die Schnittstelle zwischen Grundhalter und Wechselhalter für jeweils ein Bearbeitungswerkzeug bei der spanabhebenden Verformung von Werkstücken, insbesondere im Bereich von Mehrspindeldrehmaschinen, so flexibel auszubilden, daß ein überwiegender Teil von Einstellarbeiten für die spanabhebende Verformung an einem separaten Voreinstellplatz mittels hochgenau arbeitender, üblicherweise optischer Voreinstellgeräte vorgenommen werden kann, und zwar ausschließlich im Bereich des Wechselhalters, wobei an diesem relativ zum Grundhalter in einer vorgegebenen Richtung verschiebbaren Wechselhalter variable Anschläge vorhanden sind, die am Voreinstellbereich präzisionspositioniert werden. Hierdurch ist es möglich, die jeweilige, auf das entsprechende Werkstück für dessen Bearbeitung bezogene Präzisionspositionierung des Bearbeitungswerkstücks in den optischen Voreinstellbereich vollständig zu verlagern, wo bestimmte, schon früher gewonnene Positionen, die man sich gemerkt, also aufgeschrieben hat, schnell wieder hergestellt werden können, während im Bereich des Grundhalters lediglich dessen Relativpositionierung etwa zur Spindelstirnseite noch eine Rolle spielt, die ohne größeren Aufwand, beispielsweise unter Verwendung einer speziellen Einstellvorrichtung an der Bearbeitungsmaschine schnell bestimmt werden kann.

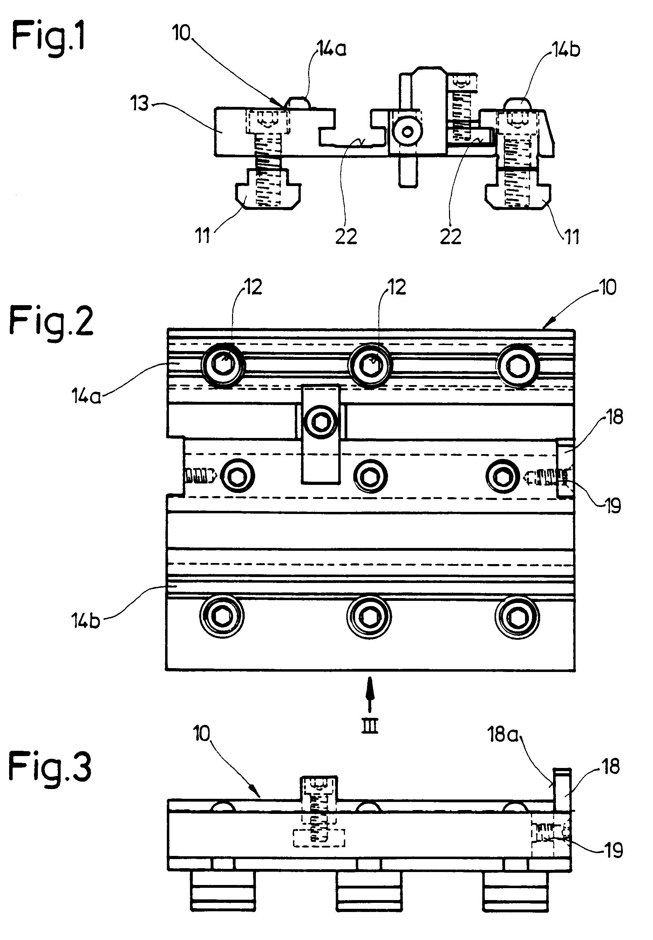

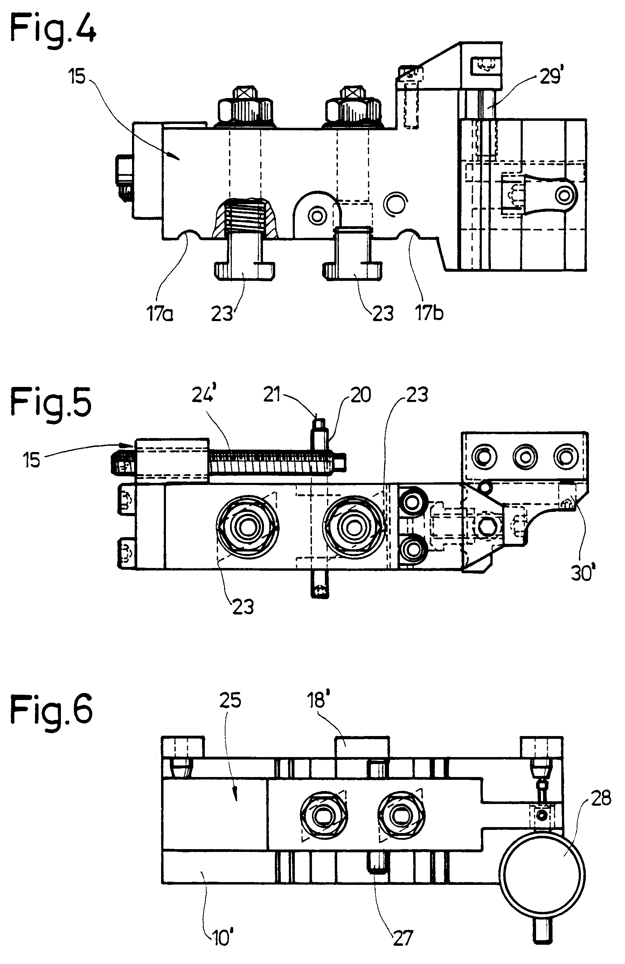

In Fig. 1 ist ein Grundhalter bei einer Bearbeitungsmaschine zur Lagerung von in den Fig. 4 und 5 bzw. 8 und 9 gezeigten Wechselhaltern mit 10 bezeichnet und umfaßt, zur eigenen Fixierung beispielsweise auf dem Querschlitten von Mehrspindeldrehmaschinen (nicht dargestellt) nach unten gerichtete, in einer Doppelreihe angeordnete T-Nutsteine 11 , die über von oben bedienbare, zugeordnete Schraubbolzen 12 (Innensechskantschrauben) festgespannt werden können.

Die beiden Längsreihen von T-Nuten verlaufen parallel zu, vom plattenförmigen Grundkörper 13 des Grundhalters nach oben vorspringenden, präzisionsgeschliffenen doppelten Führungsbahnen 14a, 14b, die als halbrunde, gegebenenfalls im Kopfbereich abgeschliffenen Längserhebungen dazu dienen, eine Präzisionspositionierung des jeweiligen, auf dem Grundhalter aufgesetzten Werkzeughalters sicherzustellen.

Betrachtet man in diesem Zusammenhang sofort die Unterseiten der in den Fig. 4 und 5 bzw. 8 und 9 dargestellten Wechselhalter 15 bzw. 16, dann erkennt man an diesen entsprechend durchlaufend präzsionsgeschliffene Längshalbnuten 17a, 17b, bzw. 18a, 18b, mit denen der jeweilige Wechselhalter auf den Grundhalter aufgesetzt ist und längs welcher die Wechselhalter auch relativ zum auf dem Querschlitten der Mehrspindelmaschine festgespannten Grundhalter verschoben werden können.

Diese halbzylindrische Präzisions-Nut/Feder-Gleitverbindung erlaubt eine Relativverschiebung zwischen Grundhalter 10 und Wechselhalter 16 bzw. 17 parallel zur Spindelachse, so daß durch diese Präzisionsgleitverbindung jedenfalls der Abstand beispielsweise einer Drehmeiselspitze als Bearbeitungswerkzeug zum Werkstück so, wie er sich aus der Voreinstellung ergibt, unverändert gesichert bleibt, auch wenn eine Relativverschiebung in Richtung "Drehlänge" hierdurch möglich ist.

Es versteht sich natürlich, daß auch die Drehlängen-Fixposition des Werkzeug- bzw. Wechselhalters 15,16 zum Grundhalter aus der Voreinstellung resultiert und im Bereich der Arbeitsmaschine nicht verändert wird. Hierzu verfügt der Grundhalter über einen Anschlag 18 für den Wechselhalter; dieser Anschlag kann, wie aus den Fig. 2 und 3 ersichtlich, beidseitig des Grundhalters je nach Wunsch angeordnet und mittels einer Feststellschraube 19 befestigt werden.

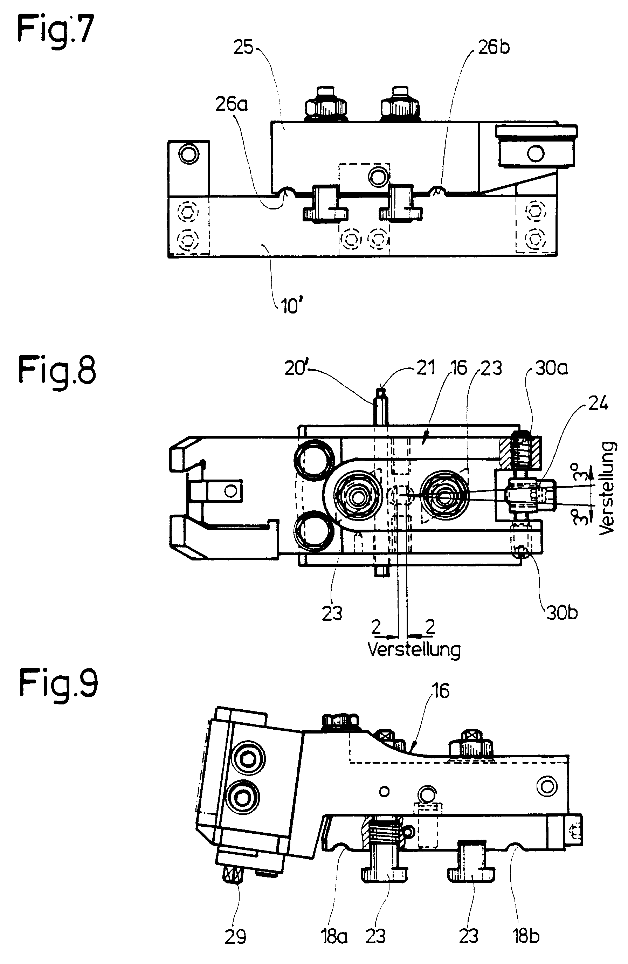

Hierdurch vervollständigt sich der für die Erfindung wichtige Aufbau des Grundhalters im wesentlichen; damit der Anschlag zwischen Grundhalter und Wechselhalter je nach den Erfordernissen (Werkstücklänge) variiert werden kann, wobei der Anschlag 18 am Grundhalter 10 ja feststehend ausgebildet ist, verfügen die jeweiligen Wechselhalter über beispielsweise eine Anschlagschraube 20, 20' (Fig. 5 und 8) zur Längsvoreinstellung, die mit ihrer Anschlagfläche 21 innen an der entsprechenden, vom Anschlag 18 gebildeten Anschlagfläche 18a anschlägt.

Durch die durch die Präzisionsgleitführung und diese Anschlagsbildungen ermöglichte Flexibilität in der Drehlängeneinstellung des Wechselhalters ergibt sich das wesentliche erfinderische Moment, nämlich im Wiederholungsfall mit den schon aufgefundenen und natürlich entsprechend notierten Daten von einem früheren gleichen Werkstück gewonnene Einstelldaten dadurch maßhaltig zu reproduzieren, daß der Wechselhalter im optischen Voreinstellbereich mit Bezug auf seinen variablen Anschlag, gebildet durch die Anschlagschraube 20 präzisionseingestellt wird - die Anschlagschraube 20 selbst braucht natürlich keine Präzisionsschraube zu sein, sollte aber über ein möglichst flaches, schwergängiges Gewinde verfügen, so daß ungewollte Verstellungen ausgeschlossen sind - jedenfalls schwergängig oder sonstwie feststellbar sein.

Demnach vervollständigt sich der Aufbau eines jeweiligen Wechselhalters durch untere T-Nutsteine, die von entsprechenden, nach oben gerichteten T-Nuten 22 am Grundhalter aufgenommen sind und dem Festspannen des Wechselhalters am Grundhalter dienen, wenn dieser gegen den Anschlag gesetzt wird. Bevorzugt handelt es sich bei den T-Nutsteinen am jeweiligen Wechselhalter 15,16 um rhombische Schwenknutensteine 23, so daß der Wechselhalter auch von oben auf den Grundhalter aufgesetzt und die Schwenknutensteine dann beim Anziehen entsprechend quergeschwenkt werden können.

Der Wechselhalter spannt dann seinerseits in für sich gesehen durchaus bekannter Weise das jeweilige Bearbeitungswerkzeug, beispielsweise Drehmeisel, welches am Werkstück arbeitet.

Auch die Einspannung und Präzisionspositionierung des Drehmeisels am Werkzeughalter erfolgt, wie dies für sich gesehen bekannt ist, im Bereich der optischen Voreinstellung, wozu weitere Werkzeuganschlagschrauben 24 am Wechselhalter 15,16 vorgesehen sind.

Die Grundfunktion ist dann so, daß nach einer ersten und gegebenenfalls auch durchaus zeitaufwendigen Einstellung für ein erstes Werkstück dessen Bearbeitung erfolgt, wobei allerdings die für dieses erste Werkstück gefundenen Einstelldaten notiert werden.

Muß jetzt auf ein anderes, beispielsweise kürzeres oder längeres Werkstück umgerüstet werden, dann läßt sich diese Umrüstung bei stationär verbleibendem Grundhalter problemlos durch eine entsprechende Verstellung der Anschlagschraube 20, 20' am Wechselhalter im optischen Voreinstellbereich getrennt zur Arbeitsmaschine durchführen; der Wechselhalter wird einfach auf das neue Maß voreingestellt und wieder auf den Grundhalter an der Arbeitsmaschine aufgesetzt, wodurch die Bearbeitung ohne weiteres Messen und Einstellen möglich ist. In gleicher Weise läßt sich das Bearbeitungswerkzeug ändern, beispielsweise ein abgenutzter Drehmeisel ersetzen.

Mit besonderem Erfolg läßt sich die vorliegende Erfindung auch einsetzen, wenn auf der jeweiligen Bearbeitungsstation mit der bisherigen Ausrüstung nicht mehr gearbeitet werden kann, diese also nicht mehr benötigt wird, weil ein anderes Schneidwerkzeug, beispielsweise ein Fräsaggregat aufgespannt werden soll, andererseits aber nicht auszuschließen ist, daß zu einem späteren Zeitpunkt auf die Bearbeitung von Werkstücken der früher schon eingestellten und eingemessenen sowie in ihren Daten notierten Art wieder zurückgegriffen wird. In diesem Fall ist ein problemloses Rückrüsten auf die früher erfaßten Maße möglich, weil nach der an der Arbeitsmaschine durchzuführenden exakten Ausrichtung des Grundhalters beispielsweise zur Spindelnase sämtliche früher gefundenen Einstellmaße mittels des optischen Voreinstellgeräts erneut am Wechselhalter realisiert werden können, der nach Anschlagpositionierung auf dem Grundhalter am neuen Werkstück das gleiche Maß wie am früheren Werkstück dreht.

Zur exakten Ausrichtung des Grundhalters zur Spindelnase und Befestigung am Querschlitten kann eine Einstellvorrichtung mit Meßuhrenhalter dienen, wie sie in den Fig. 6 und 7 gezeigt ist; diese Einstellvorrichtung 25 hat die gleiche Grundform wie ein Wechselhalter mit unteren Halbnut-Präzisionsnuten 26a, 26b und eine Anschlagschraube 27, die an den Anschlag 18' des Grundhalters 10' (Fig. 6 und 7) heranfährt. Durch eine Meßuhr 28 an der Einstellvorrichtung 25 kann man dann einen präzisen Abstand des Grundhalters zur Spindelstirnseite einstellen.

Wie am besten den Fig. 8 und 9 entnehmbar, vervollständigen sich der Aufbau und die Einstellmöglichkeiten am Wechselhalter noch durch eine Einstellschraube 29 für die Schneidhöhe, also die Höhenposition des Drehmeisels beispielsweise, eine Einstellschraube 24 für den Durchmesser sowie beidseitige Einstellschrauben 30a, 30b zur Einstellung der Zylindrizität. Vergleichbare Einstellschrauben in Fig. 4 sind mit den gleichen Bezugszeichen, lediglich zum Unterschied mit einem Beistrich oben versehen.

## Patentansprüche

1. Verfahren zum voreingestellten Umrüsten bei spanabhebenden Bearbeitungsmaschinen, insbesondere Drehautomaten, Mehrspindeldrehmaschinen u.dgl., auf andere Werkstücke oder Bearbeitungsvorgänge (Drehen, Fräsen), wobei ein plattenförmiger Grundhalter (10) auf einem entsprechenden Schlitten oder Bett der Bearbeitungsmaschine eingestellt und befestigt und auf dem Grundhalter ein Wechselhalter (Werkzeughalter) (15,16) für das jeweilige Bearbeitungswerkzeug angeordnet wird, dadurch gekennzeichnet, daß bei einem ersten Einstellvorgang gewonnene Einstelldaten für die Bearbeitung eines bestimmten Werkstücks oder für einen bestimmten Bearbeitungsvorgang bei einem sich später wiederholtem erneuten Rüstvorgang dadurch wieder verwendet werden, daß die Schnittstelle zwischen Grundhalter (10) und Wechselhalter (15, 16) für jeweils ein Bearbeitungswerkzeug bei der spanabhebenden Verformung von Werkstücken aufgetrennt und aus dem Maschineneinstellbereich dadurch herausgenommen wird, daß an einem zur jeweiligen Bearbeitungsmaschine getrennten optischen Präzisions-Voreinstellbereich am jeweiligen Wechselhalter ein variabler Anschlag auf ein gleiches oder um bekannte Beträge unterschiedliches, aus früheren Einstellvorgängen gewonnenes Drehlängenmaß optisch eingemessen und anschliessend der Wechselhalter (15, 16) auf Anschlag auf den Grundhalter am Maschinenschlitz aufgesetzt und befestigt wird.

2. Verfahren nach Anspruch 1, dadurch gekennzeichnet, daß der Wechselhalter parallel zur Spindelachse längs beiderseitiger Präzisionsgleitführungen (14a, 14b) auf den im Voreinstellbereich vorgegebenen Anschlag auf dem Grundhalter (10) verschoben wird.

3. Verfahren nach Anspruch 1 oder 2, dadurch gekennzeichnet, daß zur Gewährleistung der durch die optische Einmessung erzielten Schnittstellengenauigkeit zwischen Grundhalter (10) und Wechselhalter (15, 16) bei vollständigem Umrüsten der Grundhalter (10) auf dem Maschinenschlitten durch eine zusätzliche mechanische, in Grundfunktion und Aufbau mit einem Wechselhalter (15, 16) vergleichbaren Einstellvorrichtung auf seine vorgegebene relative Präzisionsposition zur Spindelstirnseite eingestellt wird.

4. Verfharen nach Anspruch 3, dadurch gekennzeichnet, daß die mechanische Einstellvorrichtung auf dem Grundhalter (10) mittels T-Nutsteinen (11) befestigt und der Abstand zur Spindelstirnseite mittels einer Meßuhr bestimmt wird.

5. Verfahren nach einem der Ansprüche 1 bis 4, dadurch gekennzeichnet, daß die Präzisionsgleitführungen (14a, 14b) zwischen Grundhalter (10) und jeweiligen Wechselhalter (15, 16) parallel zur jeweiligen Spindelachse verlaufen und hierdurch der im optischen Voreinstellbereich gewonnene Durchmesserwert von diesem beim Befestigen des Wechselhalters (15, 16) auf dem Grundhalter (10) unverändert übernommen wird.

6. Verwendung einer Vorrichtung zum voreingestellten Umrüsten bei spanabhebenden Bearbeitungsmaschinen, insbesondere Drehautomaten, Mehrspindeldrehmaschinen u.dgl., auf andere Werkstücke oder Bearbeitungsvorgänge (Drehen, Fräsen), mit mindestens einem plattenförmigen Grundhalter (10), auf dem jeweils ein ein spanabheben es Bearbeitungswerkzeug tragender Wechselhalter (15,16) befestigt ist, zur Durchführung des Verfahrens nach einem oder mehreren der Ansprüche 1 bis 5, dadurch gekennzeichnet, daß Grundhalter (10) und jeweiliger Wechselhalter (15, 16) über eine in Längsrichtung zur Spindelachse verlaufende Präzisionsgleitführung relativverschieblich zueinander verbunden sind und am Grundhalter (10) ein oder mehrere feste Anschläge (18) und am jeweiligen Wechselhalter ein durch eine optische oder mechanische Voreinstellung variierbarer Anschlag (21) vorgesehen sind.

7. Verwendung nach Anspruch 6, dadurch gekennzeichnet, daß der Grundhalter mittels T-Nutensteine (11) auf dem Querschlitten einer Bearbeitungsmaschine aufspannbar ist, daß der Grundhalter (10) selbst wieder T-Nuten (22) aufweist zur Aufnahme von T-Nutensteinen (thombischen Schwenknutensteinen 23) am jeweiligen Wechselhalter (15, 16), daß am Grundhalter eine den stationären Anschlag bildende, auf unterschiedlichen Seiten montierbare Anschlagsplatte (18) angeordnet ist und daß die von der Anschlagsplatte (18) gebildete Anschlagsfläche senkrecht zur Präzisionsgleitführung zwischen Grundhalter und Wechselhalter verläuft.

8. Verwendung nach Anspruch 6 oder 7, dadurch gekennzeichnet, daß die Präzisionsgleitführung zwischen Grundhalter (10) und Wechselhalter (15, 16) gebildet ist von präzisionsgeschliffenen Halbrund-Längserhe bungen am Grundhalter (10) und entsprechenden, im gleichen Abstand angeordneten präzisionsgeschliffenen Halblängsnuten (17a, 17b) an der Unterseite des jeweiligen Wechselhalters (15, 16).

9. Verwendung nach einem der Ansprüche 6 bis 8, dadurch gekennzeichnet, daß der variable Anschlag am Wechselhalter vor einer Anschlagschraube (20, 20') gebildet ist, die parallel zur Spindellängsrichtung verläuft.

10. Verwendung nach Anspruch 9, dadurch gekennzeichnet, daß die Drehlängen-Anschlagschraube (20, 20') im Gewinde des Wechselhalters entsprechend schwergängig sitzt oder durch Fixierquerschrauben festsetzbar ist.

11. Verwendung nach einem der Ansprüche 6 bis 10, dadurch gekennzeichnet, daß am Wechselhalter weitere Einstellmittel (Stellschrauben 24, 24'; 30a, 30b, 30'; 29, 29') zur Einstellung des Durchmessers, der Zylindrizität und der Höhe vorgesehen sind.

## Claims

1. A method for the preset change-over, with respect to cutting machines, more particularly automatic lathes, multispindle lathes and the like, to different workpieces or machining processes (turning, milling), wherein a laminar base holder (10) is located and fixed on a corresponding slide or bed of the processing machine and a changeable holder (tool holder) (15, 16) for the respective machining tool is placed on the base holder, characterized in that setting data obtained in a first setting procedure for machining a specific workpiece or for a specific machining procedure is used again in a fresh setting procedure repeated subsequently, by the interface between the base holder (10) and the changeable holder (15, 16) for a respective machining tool in the shaping of workpieces by cutting being separated and removed from the machine setting area, by a variable stop being optically measured in an optical precision pre-setting area, separated from the respective processing machine, to a turning length measurement which is identical or varies by known amounts, obtained from earlier setting procedures, and by the changeable holder (15, 16) then being mounted on the stop on top of the base holder on the machine slot and being fixed in position.

2. A method according to claim 1, characterized in that the changeable holder is displaced parallel to the spindle axis along bilateral precision slideways (14a, 14b) onto the stop on the base holder (10) which is predetermined in the presetting area.

3. A method according to claim 1 or 2, characterized in that in order to ensure the interface accuracy obtained by the optical measurement between base holder (10) and changeable holder (15, 16) in a complete change-over, the base holder (10) on the machine slide is set by means of an additional mechanical setting device, comparable in its basic function and design to a changeable holder (15, 16), to its predetermined relative precision position with respect to the end face of the spindle.

4. A method according to claim 3, characterized in that the mechanical setting device is fixed on the base holder (10) by means of T-nuts (11), and the distance from the end face of the spindle is determined by means of a dial gauge.

5. A method according to one of claims 1 to 4, characterized in that the precision slideways (14a, 14b) between the base holder (10) and the respective changeable holder (15, 16) extend parallel to the respective spindle axis and therefore the diameter value of the latter obtained in the optical presetting area is adopted unchanged when the changeable holder (15, 16) is fixed on the base holder (10).

6. Use of a device for the preset change-over, with respect to cutting machines, more particularly automatic lathes, multi-spindle lathes and the like, to different workpieces or machining processes (turning, milling), comprising at least one laminar base holder (10) on which is fixed a respective changeable holder (15, 16) bearing a cutting tool, for the implementation of the method according to one or more of claims 1 to 5, characterized in that the base holder (10) and the respective changeable holder (15, 16) are connected so as to be displaceable relative to one another by means of a precision slideway extending in the longitudinal direction with respect to the spindle axis, and one or more fixed stops (18) are provided on the base holder (10) and a stop (21) which may be varied by optical or mechanical presetting is provided on the respective changeable holder.

7. Use according to claim 6, characterized in that the base holder may be clamped by means of T-nuts (11) on the crossslide of a processing machine, in that the base holder (10) itself has T-grooves (22) for holding T-nuts (rhombic rotating nuts 23) on the respective changeable holder (15, 16), in that a stop plate (18) is arranged on the base holder, forming the stationary stop and mountable on different sides, and in that the stop surface formed by the stop plate (18) extends perpendicularly to the precision slideway between base holder and changeable holder.

8. Use according to claim 6 or 7, characterized in that the precision slideway between base holder (10) and changeable holder (15, 16) is formed by precision-ground, semi-circular longitudinal elevations on the base holder (10) and corresponding precision-ground half longitudinal grooves (17a, 17b) arranged at the same distance apart on the underside of the respective changeable holder (15, 16).

9. Use according to one of claims 6 to 8, characterized in that the variable stop on the changeable holder is formed by a stop screw (20, 20') which extends parallel to the longitudinal direction of the spindle.

10. Use according to claim 9, characterized in that the turning length-stop screw (20, 20') is seated so as to be appropriately tight in the thread of the changeable holder or may be fixed in position by transverse fixing screws.

11. Use according to one of claims 6 to 10, characterized in that other setting means (adjusting screws 24, 24'; 30a, 30b, 30'; 29, 29') are provided on the changeable holder for setting the diameter, the roundness and parallelism and the height.

## Revendications

1. Procédé de transformation pré-réglée de machines d'usinage avec enlèvement de copeaux, notamment de tours automatiques, de tours multibroches ou machines analogues, pour passer à d'autres pièces ou à d'autres usinages (travail au tour, fraisage), une embase (10) en forme de plaque étant réglée et fixée sur un chariot ou banc correspondant, et l'embase (10) comporte un porte-outil de remplacement (15, 16) pour l'outil respectif, caractérisé en ce que les données de réglage obtenues au cours d'une première opération de réglage pour l'usinage d'une certaine pièce ou pour une certaine opération sont de nouveau utilisées au cours d'une opération d'équipement renouvelée, répétée ultérieurement, et la jonction entre l'embase 10 et le porte-outil de remplacement (15, 16) est séparée pour chaque outil pour l'usinage de pièces avec enlèvement de copeaux et est dégagée de la plage de réglage de la machine, et dans une zone de pré-réglage de précision, optique, sur le porte-outil de remplacement, respectif, séparé de la machine respective, on règle une butée variable sur une longueur de travail au tour, mesurée optiquement, égale ou différente d'une valeur connue, provenant de réglages antérieurs puis on rapporte le porte-outil (15, 16) à la butée de l'embase dans la fente de la machine et on le fixe.

2. Procédé selon la revendication 1, caractérisé en ce que le porte-outil est glissé parallèlement à la Vis mère le long de deux guidages de coulissement de précision (14a, 14b) prévus de part et d'autre, pour arriver à la butée prédéterminée dans la plage de pré-réglage sur l'embase (10).

3. Procédé selon la revendication 1 ou 2, caractérisé en ce que pour garantir la précision de réglage de la coupe obtenue par la mesure optique, entre l'embase (10) et le porte-outil (15, 16), lors d'une transformation complète de l'embase (10), on règle sur le chariot de la machine, par un dispositif de réglage mécanique complémentaire, dont la fonction de base et la structure sont comparables à un porte-outil (15, 16), sur sa position de précision relative, prédéterminée par rapport à la face frontale de la vis mère.

4. Procédé selon la revendication 3, caractérisé en ce que le dispositif de réglage mécanique est fixé à l'embase (10) par l'intermédiaire de galets pour rainures à section en T, (11) et la distance par rapport à la face frontale de la vis mère se mesure à l'aide d'un comparateur à palpeur.

5. Procédé selon l'une des revendications 1 à 4, caractérisé en ce que les guidages de précision (14a, 14b) sont parallèles à la vis mère respective, entre l'embase (10) et le porte-outil (15, 16) respectif et ainsi la valeur du diamètre obtenu dans la plage de pré-réglage optique est reprise inchangée lors de la fixation du porte-outil (15, 16) sur l'embase (10).

6. Application d'un dispositif pour la transformation pré-réglée de machines d'usinage avec enlèvement de copeaux notamment de tours automatiques, de tours multibroches ou analogue, pour d'autres pièces ou d'autres travaux d'usinage (travail au tour, fraisage), avec au moins une embase (10) en forme de plateau sur laquelle est fixé un porte-outil (15, 16) portant un outil d'usinage avec enlèvement de copeaux, pour la mise en oeuvre du procédé selon une ou plusieurs des revendications 1 à 5, caractérisée en ce que l'embase (10) et le porte-outil (15, 16) respectif sont reliés avec coulissement relatif, par un guidage de précision aligné sur la direction longitudinale par rapport à la vis mère et l'embase (10) comporte une ou plusieurs butées fixes (18) et le porte-outil respectif comporte une butée (21) variable par un pré-réglage optique ou mécanique.

7. Application selon la revendication 6, caractérisée en ce que l'embase se fixe par l'intermédiaire de galets pour rainures à section en T (11) sur le chariot transversal d'une machine d'usinage, l'embase (10) ayant elle-même des rainures à section en T (22) pour recevoir les galets pour rainures à section en T (galets pour rainures pivotantes, en losange 23) sur le porte-outil respectif (15, 16), et sur l'embase il est prévu une plaque de butée (18), formant une butée fixe, et qui se monte sur des côtés différents, et la surface de butée formée par la plaque de butée (18) passe perpendiculairement au guidage de précision entre l'embase et le porte-outil.

8. Application selon la revendication 6 ou 7, caractérisée en ce que le guidage de précision est formé entre l'embase (10) et le porte-outil (15, 16) par des bossages longitudinaux, semi-circulaires, rodés avec précision sur l'embase (10) et des rainures de section semicirculaire (17a, 17b), rodées avec précision, distantes, prévues sur la face inférieure du porte-outil respectif (15, 16).

9. Application selon l'une des revendications 6 à 8, caractérisé en ce que la butée variable est formée sur le porte-outil par une vis de butée (20, 20') parallèle à la direction longitudinale de la vis mère.

10. Application selon la revendication 9, caractérisée en ce que la vis de butée à rotation longitudinal (20, 20') est logée dans le filetage du porte-outil, de manière à tourner difficilement et elle se bloque par des vis de blocage transversal.

11. Application selon l'une des revendications 6 à 10, caractérisée en ce que le porte-outil comporte d'autres moyens de réglage (vis de réglage 24, 24' ; 30a, 30b, 30' ; 29, 29') pour régler le diamètre, la cylindricité et la hauteur.
